# EUROPEAN PATENT APPLICATION

(11) **EP 2 255 916 A1**
(43) Date of publication of application: **01.12.2010**
(21) Application number: 10163715.5
(22) Date of filing: 24.05.2010
(51) Int. Cl.: B23K 9/28, B23K 9/32, B23K 10/00, H01R 13/00, H01R 13/642, H01R 13/645, H05H 1/34

(54) **Modular device for plasma cutting with plasma torch and cable for mutual connection to the plasma torch and a generator**

(30) Priority: 25.05.2009 IT BO20090042 U
(71) Applicant: Tec.Mo S.r.l., 40067 Rastignano (Bologna) (IT)
(72) Inventor: Bassi, Giorgio, 40067 Rastignano (BO) (IT)
(74) Representative: Negrini, Elena

(57) **Abstract**

A modular device for the plasma cutting comprises at least one among:
- plasma torch (1) for robot,
- plasma torch (1) for plotter,
- plasma torch (1) for manual use.

Each of said torches (1) is equipped with a body (26) and of a first connecting member (37) fixed, directly or by means of a respective cable segment, to said body of the torch (26) where said first connecting members (37) are mutually identical.

Said device comprises further a plurality of cables whose ends are equipped with connecting members for the mutual connection and for the connection of the first connecting member (37) of the torch (1) to a coupling means of a generator.

## Description

The present invention relates to the technical field concerning the plasma torches and in particular it refers to plasma cutting modular device of multifunctional type.

In the productive places, where the plasma cutting on the metal is carry out, for example smithies, metal production structures, windows & door frames, gates and the like, naval shipbuilding and others, are often used simultaneously plasma torch of robot or robotized arms type, torch of flat cutting plotter type, the so-called x, y plotter and manual torches.

Said torches must be connected by connection means to special generators which provide electric power supply, pneumatic supply, eventual cooling fluid supply and control and/or command signal supply.

The known torches and the respective connecting means to the generator, consisting of connectors and cables, can be fixed or of incompatible type obliging, for example, to connect a generator to the different torch types by means of respective connectors and connecting cables, even if the different types of torches are used one at each time. That causes the necessity to acquired and preserve, mainly unused, different expensive cables, with the additional risk of errors and damages.

Sometimes the operators try to make up for said situation or for temporary unavailability of a torch or a cable, by modifying them in craftsmanlike manner without having the required ability. Sometimes, they even try to repair the torch bodies which is beyond the normal interventions of substitution of the consumption parts by the user capacity. Both said events cause serious risks for the safety of the persons and for the connected apparatus, such as the expensive generators.

An object of the present invention is to propose a modular device for plasma cut comprising a set of torches of different kinds suitable for the robot, for the plotters and for the manual cutting, with cables and interchangeable connectors which are useful also in series like extension cord to avoid duplications of expenses, connecting errors and to avoid the dangerous interventions effected by non-professional operators.

Another object is to prevent dangerous non-authorized interventions on the body of the torches.

Further object is to propose a manual plasma torch with quick coupling which allows the detachment of the torch from the respective cable without tools and in simply and quickly manner.

A further object is to propose a set of plasma torches with quick coupling fit to allow the connection only to plasma generators compatible with it.

Other object is to propose a device which allows the substitution of the connecting cable by means of a simple connection and manual detachment, maintaining unaltered the security conditions.

The above-mentioned objects are obtained according to the content of the claims.

The characteristics of the present invention are evidenced in the follows with particular reference to the enclosed drawings, in which:
- figure 1 shows a side-view of a manual type of plasma torch device, object of the present invention;
- figure 2 shows a side-view of a robot type of plasma torch device, object of the present invention;
- figure 3 shows a side-view of a flat plotter type of plasma torch device, object of the present invention;

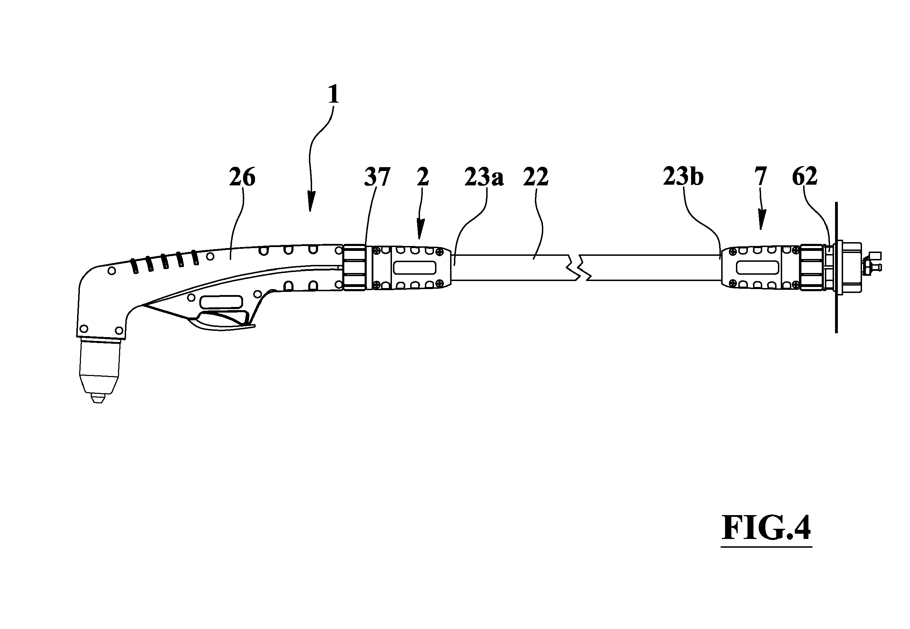

- figure 4 shows a side-view of the plasma torch of figure 1 in a connecting condition to a generator by means of a cable partially shown;

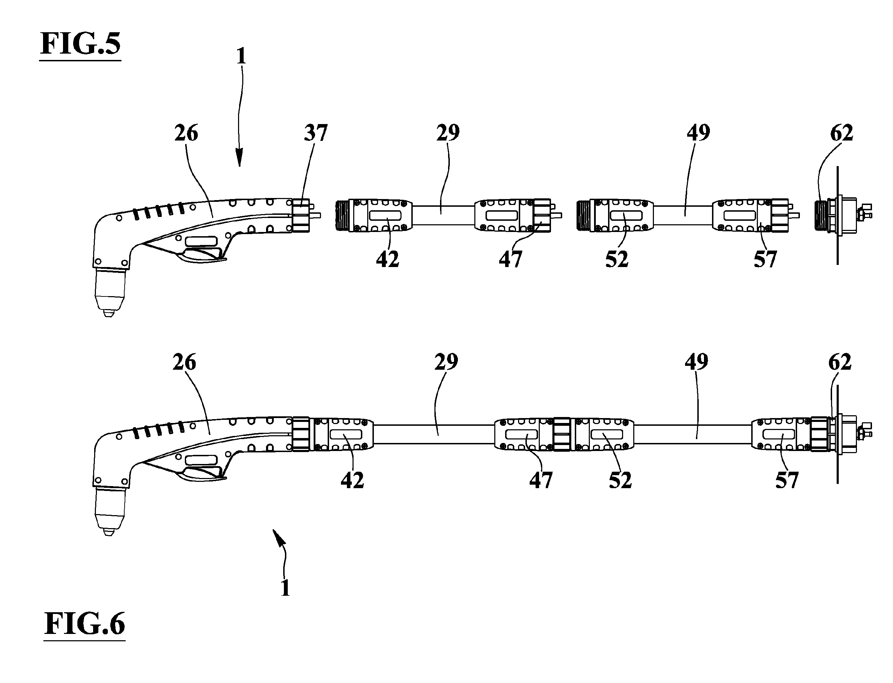

- figure 5 shows a side-view and a partial view of the torch comprising two cables in condition near to mutual connection to a torch and to a generator;
- figure 6 shows a side-view of the torch of figure 5 in a connecting condition;

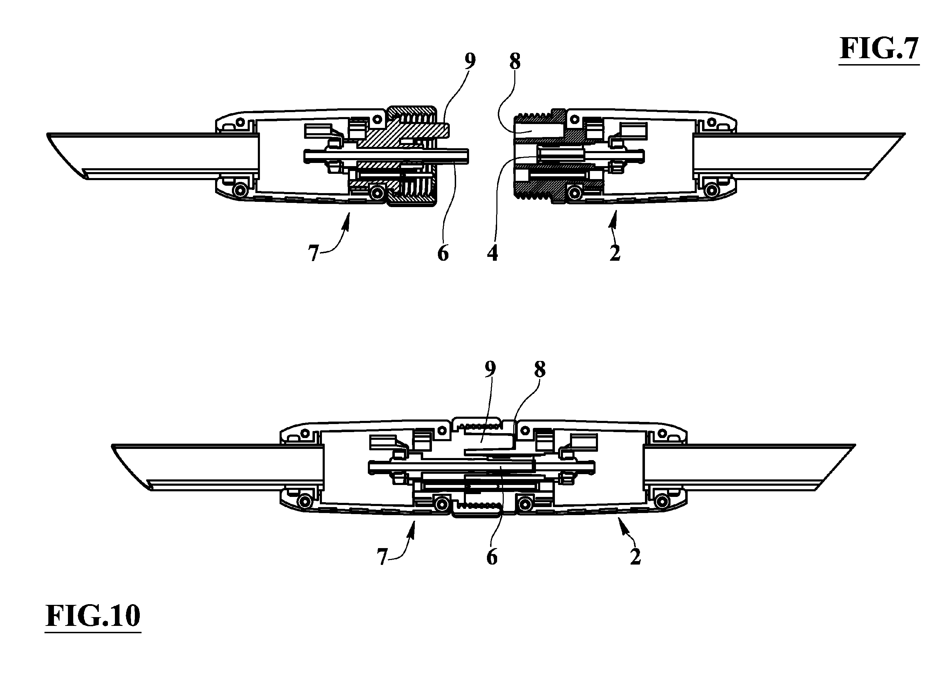

- figure 7 shows a sectional view of a couple of male and female members of figure 5;

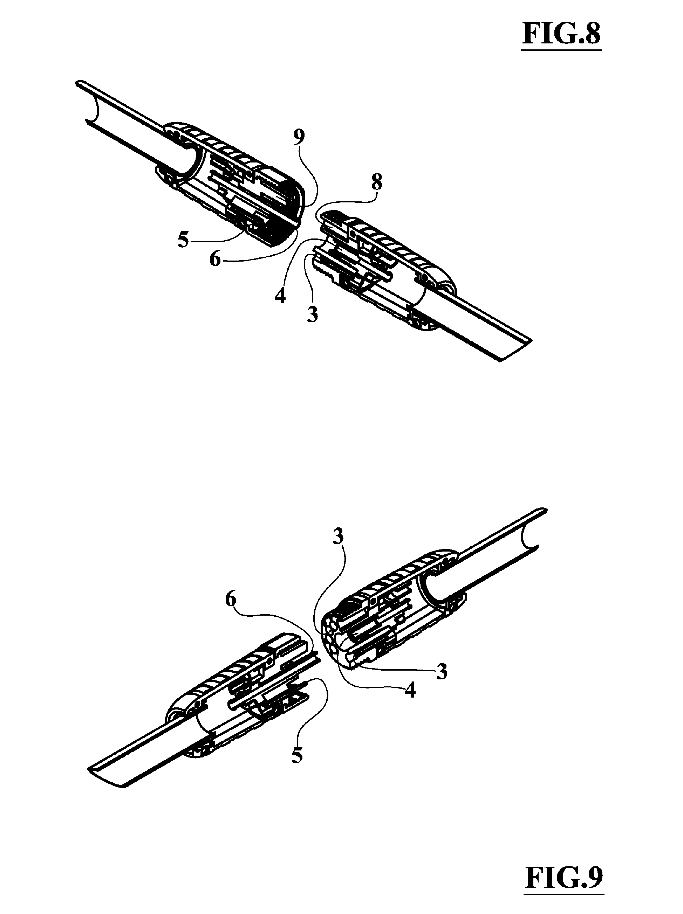

- figure 8 shows an axonometric side-view of the couple of members of figure 7;
- figure 9 shows an axonometric view of the couple of members of figure 7 seen from a different observation point other than those of figure 8;
- figure 10 shows a side-view and sectional view of the couple of members of figure 7 in a connecting condition.

With reference to figures from 1 to 10, numeral 1 indicates any one of plasma torches for robot type, for plotter type or manual type, of the modular device for the plasma cutting object of the present invention.

The modular device for plasma cut comprise at least one set of plasma torches for robot, one set of plasma torches for plotter and one set of plasma torches for manual use where all said torches require either the same type of power supply or send power supply regulation signals to the generator.

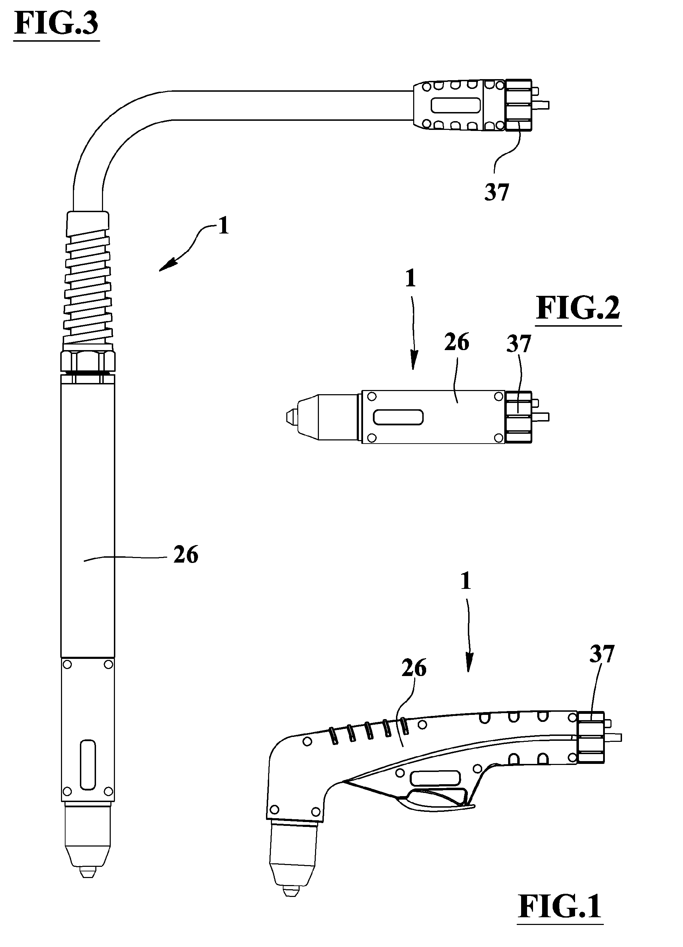

Each of said torches 1 is equipped with a body 26 and of a first connecting member 37 fixed, directly or by means of a respective cable segment, as in the robot type torch in figure 3, to said body of the torch 26.

The first connecting members 37 of the various torches are mutually identical. The device comprises furthermore a plurality of cables 22, 29, 49, of various lengths, whose ends are equipped with connecting members 2, 42, 52, 7, 47, 57 for the mutual connection and for the connection of the first connecting member 37 to a coupling means 62 of the generator.

The bodies 26 of the torches 1 are closed in an irreversible manner to prevent the opening without damaging or destroying themselves. In particular the bodies 26 of the torches 1 are mainly constituted by two complementary shells, mutually fixed by means of screws blocked in their seats with glues or resins applied to the thread or over the respective heads, or by mutual welding of the shells effected in the seats of the screws, or by co-melting or by gluing the edges of the shells mutually.

The first connecting member 37 of each torch 1, fit to removably connect to cables connecting to the generator, is irremovably fixed to the respective body of the torch 26.

Preferably the first connecting member 37 is of male type and is connected to the outputs, ports and contacts of the respective torch.

One of the above-mentioned cables 22 is equipped, at its first end 23a, with a connecting member of female type 2 and in corresponding to the other end 23b is equipped with a connecting member of male type 7.

The coupling means 62 associated to the generator and connected to the outputs and ports of this latter is of female type and is blocked, by thread means or joint means, to a wall of the generator.

The coupling means 62 is arranged for the connection to anyone of the male connector compatible with the cables 22, 29, 49.

The device comprises any number or length cables. Both ends of each cable are equipped with respective complementary connecting members in order to link them depending to the connecting distances to be covered.

The connecting members of female type 2, 42, 52, 62 and of male type 7, 37, 47, 57 can be placed in the mutual connecting and mutual detaching conditions by manual activation without tools.

The connecting portions of the first connecting member 37 and of the coupling means 62 are complementary to those of female members 2, 42, 52 and of male members 7, 47, 57 which reproduce the elements and the forms respectively of the male members and of the female members of the cables.

The female members 2, 42, 52, 62 are provided with a plurality of concavities 3, 4 parallel respect to the axis of the same member. A set of said concavities 3, internally equipped with electrical female connectors or predisposed for said connectors, is placed on a circumference in the centre of which there is a concavity having a female type of electrical connector for high amperage and a female connector of pneumatic type.

The members male 7, 37, 47, 57 are provided with a plurality of protrusions 5, 6 parallel respect to the axis of the same member. A set of said protrusions 5, consisting of male electrical connectors, are disposed on a circumference in the centre of which there is a protrusion 6 of male electrical connector for high amperage and a male connector of pneumatic type.

In the connecting condition the protrusions are engaged into the concavities to ensure the electrical and pneumatic connections between generator and torch.

To ensure the correct electrical and pneumatic connections in the connecting condition, the female members 2, 42, 52, 62 and male members 7, 37, 47, 57 are also equipped with alignment means respectively female 8 and male 9 fit to allow the connecting condition of the members 2, 7 in a single mutual connecting position.

The female alignment means 8 comprises a shaped cavity, with polygonal and longitudinally variable transversal sections, to allow the insertion of only male alignment means 9 having a protuberance almost complementary and compatible with said shaped cavity; also said protuberance has polygonal and longitudinally variable transversal sections.

The most internal portions of the cavity of the female alignment means 8 and the most external of the protuberance of the male alignment means 9 have sections lower than those of the respective opposite portions.

The transversal sections of the female alignment means 8 and male alignment means 9 are rectangular, ovals or preferably approximately triangular.

The invention also provides that each female alignment means 8 and each male alignment means 9 is equipped with at least one shaped side.

Each shaped side of the female alignment means 8 corresponds to a respective shaped side of the male alignment means 9.

The positions of the shaped sides in the female 8 and male alignment means 9 correspond to various compatibilities of the apparatuses connected to the female and male members. In other words, the outlines of the female 8 and male 9 alignment means allow or prevent the mutual connection of the members depending on the compatibility of the generator and of the torch to which are associated. It is also possible to use a shaped side of the female 8 and male 9 alignment means to prevent the connection of generators and torches of different brands.

In the connecting condition of an element of any one of the male connecting member 7, 37, 47, 57 with the female connecting members of 2, 42, 52, 62 the longitudinal axis of the device 1 is parallel respect to the longitudinal axes of the concavities 3, 4, of the protrusions 5, 6, of female 8 and of male 9 alignment means.

The operation of the device 1 provides, for example, to allow the connection to a generator, which supplies a certain electrical power, of plasma torches suitable of said power or having bigger power to prevent the connection to the plasma torches requiring lower power than the power supplied by the generator. In alternative or in additional, the operation of the device prevents the connection between the generators and torches of different brands or standards.

There are variants, not shown, in which the first connecting member 37 is female type and the coupling means 62 is male type, or both the first and the third connecting member are of the same type. In the latter case, the cables 22, 29, 49 are equipped, at their ends, with connecting members complementary to the first and third connecting members.

An advantage of the present invention is to provide a modular device for plasma cutting comprising a plurality of torches of different types suitable for robot, for plotter and for manual cutting, with compatible connectors and cables, interchangeable and usable also in series as extension cable to avoid duplications of costs, connecting errors and to avoid the dangerous interventions made by non-professional operators.

Other advantage is to prevent dangerous and non authorized interventions on the torch body.

Further advantage is to provide a manual plasma torch with quick coupling which allows to detach the torch from the respective cable without tools and in a simple and quick manner.

Another advantage is to provide a set of plasma torches with quick coupling able to allow the connection only to the plasma generators compatible thereto.

Other advantage is to provide a device that allows the substitution of the connecting cable by a simple connection and manual detachment, keeping unaltered the security conditions.

## Claims

1. Modular device for plasma cut **characterized in that** comprises at least one among:
plasma torch for robot, plasma torch for plotter, plasma torch designed for manual use; each of said torches (1) is equipped with a body (26) and a first connecting member (37) fixed, directly or by a respective cable segment, to said body of the torch (26) where said first connecting members (37) are mutually identical, said device comprising furthermore a plurality of cables (22, 29, 49) whose ends are equipped with connecting members (2, 42, 52, 7, 47, 57) for the mutual connection and the connection of the first connecting member (37) to a coupling means (62) of a generator.

2. Device according to claim 1 **characterized in that** the bodies (26) of the torches (1) are closed in an irreversible manner to prevent the opening without damaging or destroying themselves.

3. Device according to claim 2 **characterized in that** the bodies (26) of the torches (1) comprise two complementary shells mutually fixed by screws blocked in their seats by glues or resins, welding in the screw seats, or by co-melting or by mutually gluing the edges of the shells.

4. Device according to claim 2 **characterized in that** the first connecting member (37) of each torch (1) for the plasma cutting is fixed in an irremovable manner to the respective body of the torch (26) and is designed for the removable connection of the connecting cables to the generator.

5. Device according to claim 1 **characterized in that** at least a cable (22) is equipped, in correspondence with each of the end (23a, 23b), with a respective second connecting member (7, 2), one is designed to be connected in removable manner to the first connecting member (37) and the another is fit for being connected in removable manner to coupling means (62) associated to the generator and connected to the outputs and ports of this latter.

6. Device according to claim 2 **characterized in that** the first connecting member (37) and the coupling means (62) are of complementary types.

7. Device according to any of the claims 2 or 3 **characterized in that** the coupling means (62) is of female type and the second connecting member related to the end (23b) fit to be connected to itself is a of male type, in order to not expose contacts of the generator having electric potentials different from zero.

8. Device according to any of the preceding claims **characterized in that** the first connecting member (37) is of male type and the second connecting member, related to the end (23a) fit to be connected thereto, is of female type.

9. Device according to claim 1 **characterized in that** comprises at least an additional cable (29, 49) equipped, in correspondence with each of the ends, with a respective connecting member (42, 47, 52, 57), said cable being designated to be connected to the cable (22) for connecting the torch to the generator extending the connecting length.

10. Device according to claims 5 and 6 **characterized in that** the connecting members of female type (2, 42, 52) and of male type (7, 47, 57) are movable between mutual connecting and detaching conditions, each female member (2, 42, 52) is provided with a plurality of concavities (3, 4) at least some of them are fit to house protrusions (5, 6) in removable manner of a male member (7) to ensure electrical and pneumatic connections in the connecting condition, said female (2, 42, 52) and male (7, 47, 57) members are also equipped with alignment means respectively female (8) and male (9) fit to allow the connecting condition of the members (2, 42, 52, 7, 47, 57) in a unique mutual connecting position.

11. Device according to claim 7 **characterized in that** the female alignment means (8) comprises a shaped cavity to allow the insertion of male alignment means (9) having a protuberance almost complementary and compatible with said shaped cavity.

12. Device according to claim 8 **characterized in that** the most internal portion of the female alignment means (8) and that of the most external of the male alignment means (9) have lower sections than those of the respective opposite portions.

13. Device according to claim 9 or claim 10 **characterized in that** the cross-sections of the female alignment means (8) and of the male alignment means (9) are rectangular, ovals or preferably approximately triangular.

14. Device according to claim 10 **characterized in that** each female alignment means (8) and male alignment means (9) can be equipped with at least a shaped side.

15. Device according to claim 11 **characterized in that** each shaped side of the female alignment means (8) corresponds to a respective shaped side of the male alignment means (9).

16. Device according to any of claims from 7 to 12 **characterized in that** the positions of the shaped sides in the female alignment means (8) and male alignment means (9) and the form of shapes, correspond to different compatibility of the apparatuses connected to the female and male members.
